# FASCICULE DE BREVET EUROPEEN

(11) **EP 3 233 521 B1**
(45) Date de publication et mention de la délivrance du brevet: **05.12.2018**
(21) Numéro de dépôt: 15828744.1
(22) Date de dépôt: 17.12.2015
(51) Int. Cl.: B60B 3/04, B60B 21/02, B21D 53/30

(54) **PROCEDE DE FABRICATION D'UNE ROUE HYBRIDE EN ALLIAGE LEGER, COMPRENANT UN FLASQUE AVANT ET UNE JANTE**
VERFAHREN ZUR HERSTELLUNG EINES LEICHTLEGIERUNGSHYBRIDRADES MIT EINEM VORDERFLANSCH UND EINER FELGE
METHOD FOR MANUFACTURING A LIGHT-ALLOY HYBRID WHEEL INCLUDING A FRONT FLANGE AND A RIM

(30) Priorité: 17.12.2014 FR 1462671
(43) Date de publication de la demande: 25.10.2017
(73) Titulaire: Saint Jean Industries, 69220 Saint-Jean d'Ardières (FR)
(72) Inventeur: DI SERIO, Emile Thomas, 69840 Chenas (FR); DUPERRAY, Lionel, 69220 Saint Jean d'Ardieres (FR)
(74) Mandataire: Cabinet Laurent & Charras
(86) Numéro de dépôt international: PCT/FR2015/053590
(87) Numéro de publication internationale: WO 2016/097628

(56) Documents cités:
- EP-A1- 0 854 792
- JP-A- 2000 168 303
- JP-A- 2001 206 262
- US-A- 4 436 133
- US-A- 5 360 261
- US-A- 5 564 792
- US-B1- 6 536 111
- US-B2- 6 530 624

## Description

L'invention se rattache au secteur technique des roues, notamment pour véhicules, véhicules automobiles, et également au secteur de la fonderie et de la forge pour la fabrication de pièces en alliage léger, par exemple à base d'aluminium ou de magnésium, destinées notamment à l'industrie automobile.

On connaît par exemple la réalisation de roue avec jante et flasque monobloc obtenue par moulage, mais nécessitant des moyens techniques complexes et couteux et récupérant des dimensions d'épaisseur très conséquentes, entraînant ainsi un poids de la roue obtenue trop important par rapport aux exigences actuelles.

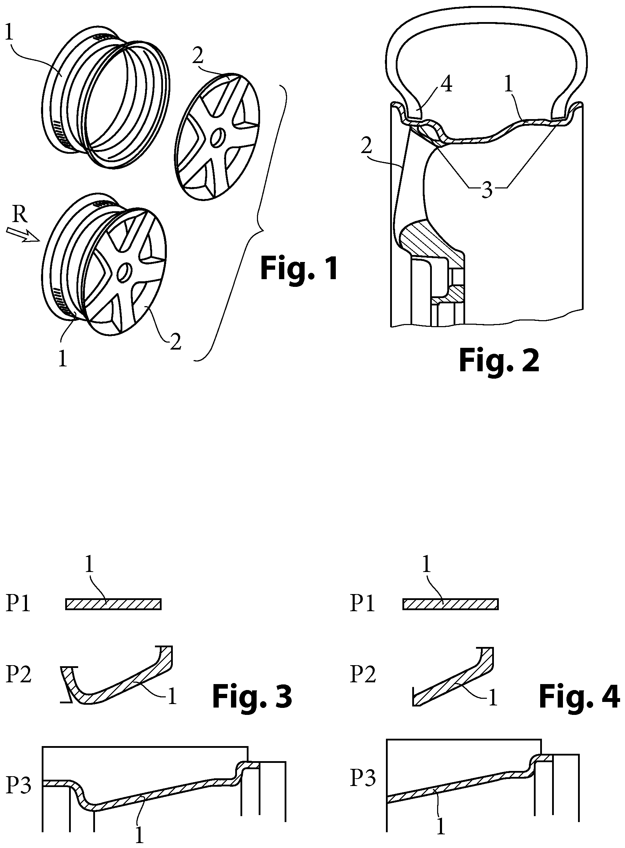

Au plan de l'art antérieur selon la figure 1, relatif aux deux aspects précités, il est connu déjà de réaliser des roues hybrides (R) en deux parties comprenant une partie jante (1) et un flasque (2) avant ou flasque de roue, ces deux parties étant solidarisées par différents moyens de liaison.

Un des moyens efficaces a été proposé par exemple dans le brevet EP 0 854 792 qui correspond à une roue hybride en deux parties obtenue selon un procédé particulier. La liaison entre la jante et le flasque est assurée par un joint soudé obtenu par une opération de soudage par friction à mouvement cyclique. Cette technologie qui fait l'objet d'une exploitation par l'une des filiales du Demandeur répond de manière satisfaisante aux exigences du marché. Cependant, la mise en oeuvre de ce procédé entraîne quelques inconvénients par rapport aux nouvelles exigences du marché qui sont par exemple d'obtenir une réduction du poids des produits de l'ordre de 20 à 30% tout en conservant un prix compétitif. Par ailleurs, dans ce brevet EP 0 854 792, la jante corroyée de la roue est basée sur un tube coulé par centrifugation, transformé par laminage ou par friction en vue d'obtenir la configuration de la jante finale. Ces opérations sont longues et coûteuses.

D'autre part, le Demandeur exploite une technologie combinant une phase de fonderie et une phase de forge de pièces en alliage d'aluminium, connue sous la marque « COBAPRESS ». Cette technologie est définie dans le brevet EP 119 365 et consiste à réaliser une préforme de fonderie par coulage d'alliage léger du type alliage d'aluminium, puis à transférer la préforme obtenue dans une matrice de forge ayant des dimensions sensiblement inférieures aux dimensions de la préforme pour ensuite effectuer une opération de forgeage permettant l'obtention des propriétés de la pièce finale à obtenir. Une opération d'ébavurage est ensuite effectuée sur le pourtour de la pièce finale obtenue après forgeage.

Le demandeur utilise déjà cette technologie pour produire des roues comme le définit le brevet FR 2 981 605, dont il est titulaire également. Dans ce brevet, le flasque de la roue est fabriqué à l'aide de la technologie COBAPRESS qui permet un gain de poids. Le flasque subit une étape de forge entre deux matrices au cours de ce procédé. Cette étape de forge est coûteuse notamment pour des petites séries où la fabrication de ces matrices de forge a un impact important sur le coût.

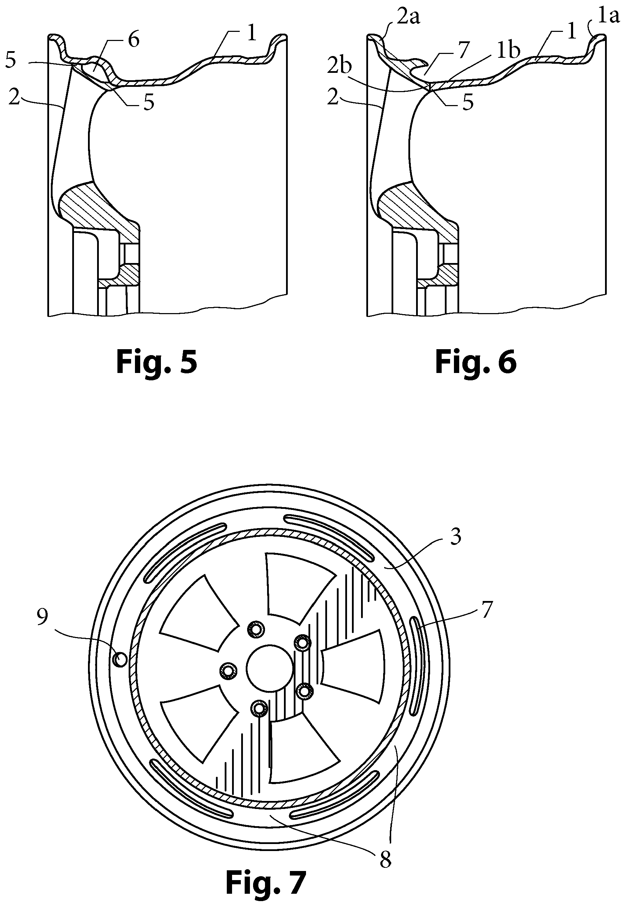

Il est rappelé que les jantes de roues doivent être agencées avec des profils faisant office de sièges (3) pour l'appui et la retenue des talons de pneumatique (4). Pour réaliser un allégement dans cette zone, un évidemment était réalisé par la création d'une cavité (6) entre les deux soudures (5) destinées à relier la partie jante (1) à la partie flasque (2), (figure 5).

D'autres solutions ont été proposées selon l'art antérieur. Ainsi, du point de vue de l'allégement du flasque, différentes solutions d'évidements du siège du talon du pneumatique ont été décrites.

Par exemple, dans le brevet EP 1230099, son titulaire présente une solution où l'un des sièges de talons de pneumatique s'étend vers l'intérieur à partir de la surface interne de la paroi de la jante de roue de façon autoporteuse, tandis qu'un profil extérieur de la jante de roue n'est pas imposé par le profil intérieur de la jante de roue. Cette forme qui se trouve sur toute la circonférence de la pièce permet un allégement mais le perçage et le positionnement de la valve sont difficiles à réaliser dans cette configuration.

Le brevet US 5271663 décrit un autre exemple de réalisation, mais dans une technologie de fabrication différente. Des évidements sont réalisés par usinage dans les zones peu contraintes du talon de siège de pneumatiques. Ces évidements permettent un gain de masse ainsi qu'un équilibrage de la roue. L'usinage de ces évidements est cependant une opération longue et coûteuse.

Ainsi, selon l'art antérieur ci-avant rappelé, les solutions existantes pour la réalisation des évidements dans le siège de talon de pneumatique entraînent un important enlèvement de copeaux et sont donc longues et coûteuses.

Le brevet US 6536111 décrit d'autres exemples de réalisation d'une roue hybride en deux parties. La jante est réalisée par roulage d'une bande de métal, puis soudage bout à bout des deux extrémités de cette bande. Le flasque avant est réalisé par coulage ou forge, en intégrant des évidements au niveau du talon de pneumatique. La jante et le flasque avant sont ensuite assemblés par soudage, par exemple par faisceau d'électrons, à l'arc, par friction ou inertie. Cette seconde soudure est réalisée sur l'extérieur de la roue, puis usinée.

La démarche du Demandeur a donc été, à partir des technologies précitées, de réfléchir à une solution de conception d'une roue hybride en deux parties en alliage léger, améliorée par rapport aux solutions connues et répondant aux besoins du marché.

Le demandeur a donc été amené à concevoir et mettre au point un nouveau procédé à partir d'une sélection spécifique de phases opératoires.

Ainsi et selon une première caractéristique de l'invention, le procédé de fabrication d'une roue hybride en alliage léger, notamment à base d'aluminium ou de magnésium, comprenant un flasque avant et une jante, met en oeuvre les différentes phases opératoires suivantes, selon lesquelles :
- on réalise le flasque avec un profil interne apte à constituer un siège de talon de pneumatique ;
- on réalise la jante avec, d'un côté, un profil externe apte à constituer un siège de talon de pneumatique, et de l'autre côté, un flanc circulaire d'assemblage avec une partie du flasque ;
- on assemble le flasque avec la jante, au niveau du siège dudit flasque et du flanc circulaire de la jante.

Le procédé est caractérisé en ce que l'assemblage entre la jante et le flasque est réalisé par soudage du flanc circulaire de la jante et du flasque à l'aide d'une unique soudure par friction malaxage à l'aide d'un pion, en position permettant l'accès des deux côtés de la soudure.

Le soudage par friction malaxage à l'aide d'un pion est connu sous le nom de « Friction Stir Welding » ou FSW en anglais. La soudure est réalisée en mélangeant la matière à l'état pâteux, c'est-à-dire en phase solide. Cette technique permet de souder des alliages (notamment d'aluminium) non soudables ou difficilement soudables par des techniques classiques, impliquant une fusion de la matière. De plus, le soudage en phase solide permet d'éviter la formation de bulles, susceptible de se produire lors d'une transition liquide-solide. La matière subit une hausse de température plus réduite, de sorte que la zone affectée thermiquement (ZAT) présente de meilleures propriétés mécaniques, par rapport aux techniques classiques. La tenue de la soudure sous contraintes statiques et en fatigue est ainsi améliorée.

Avantageusement, on réalise des évidements au niveau du siège du flasque, lesdits évidements ne couvrant pas la circonférence de la roue, et présentant un profil en « U » orienté en direction de la zone circulaire d'assemblage de la jante.

Le flasque peut être réalisé par coulage, par forge, ou par une double opération de coulage et forge.

Selon un premier mode de réalisation, la double opération de coulage et forge comprend une opération de coulage d'une préforme de fonderie, un transfert de ladite préforme dans une matrice de forge, une opération de forgeage de ladite préforme en vue de l'obtention du flasque, et un ébavurage pour l'obtention du dit flasque.

Selon un deuxième mode de réalisation, la double opération de coulage et forge comprend une opération de coulage d'une préforme de fonderie, un stockage de ladite préforme, un transfert de ladite préforme dans un four permettant de la réchauffer, un transfert de ladite préforme dans une matrice de forge, une opération de forgeage de ladite préforme en vue de l'obtention du flasque, et un ébavurage pour l'obtention dudit flasque.

De préférence, lorsque le flasque est réalisé par une double opération de coulage et forge, les évidements sont réalisés dans le siège de talon de pneumatique sur le flasque lors de l'opération de coulage.

Avantageusement, la jante peut être réalisée suivant les opérations successives suivantes : une opération de fabrication d'un flanc circulaire ; une opération d'expansion en une seule étape de ce flanc circulaire aux dimensions de la jante finale ; puis une opération de fluotournage à froid ou à chaud du flanc circulaire jusqu'à obtenir la jante dans sa forme et profil finaux, comportant un épaulement uniquement du côté qui ne sera pas soudé au flasque.

En pratique, lors de l'opération de fabrication, le flanc circulaire peut être obtenu par toute technique adaptée à l'application visée.

Selon un mode de réalisation préféré, le flanc circulaire est réalisé par extrusion à chaud ou à froid d'une billette en alliage léger.

En alternative, le flanc circulaire est réalisé par coulée en fonderie.

Selon une autre alternative, le flanc circulaire est réalisé par frittage de poudre.

D'autres techniques peuvent être mises en oeuvre pour fabriquer le flanc circulaire, sans sortir du cadre de l'invention.

De préférence, l'opération d'expansion et l'opération de fluotournage sont réalisées à froid.

Egalement de préférence :
- le soudage par friction malaxage est précédé d'une opération d'usinage des zones à assembler ;
- le soudage par friction malaxage est suivi d'une opération d'usinage des deux côtés (interne et externe) de la soudure destinée à retirer la bavure et les éventuels défauts en fond de soudure.

Le procédé selon l'invention offre de nombreux avantages, qui apparaitront à la lecture de la présente description.

Les opérations d'expansion et de fluotournage peuvent notamment être simplifiées par rapport aux brevets FR 2 981 605 et EP1230099B1 du fait de l'utilisation d'une seule soudure au lieu de deux.

Comme pour les brevets FR 2 981 605 et EP1230099B1, la roue résiste parfaitement au cahier des charges des constructeurs en termes de tenue en fatigue et à l'impact en ayant un gain de poids important par rapport aux roues obtenues en fonderie traditionnelle.

Par rapport aux brevets précédemment cités, l'invention permet de simplifier l'opération d'expansion qui ne se déroule qu'en une seule étape au lieu de deux, de simplifier l'opération de fluotournage car le profil final de la jante comporte une géométrie beaucoup moins complexe du fait de la soudure unique. A noter également qu'une seule soudure permet d'avoir une plus grande variété de designs au niveau du flasque.

Ces caractéristiques et d'autres encore ressortiront bien de la suite de la description.

Pour fixer l'objet de l'invention illustrée d'une manière non limitative aux figures des dessins,
- La figure 1 représente selon l'art antérieur la réalisation d'une roue hybride en deux parties avec une partie jante et une partie flasque.
- La figure 2 représente le montage du pneumatique sur la jante avec le positionnement des talons de pneumatique sur leur siège.
- La figure 3 représente d'une manière schématique selon l'art antérieur, les opérations successives P1, P2, P3 d'obtention du profil de la jante.
- La figure 4 représente d'une manière schématique selon l'invention les opérations successives P1 (obtention d'un flanc circulaire), P2 (expansion en une étape dudit flanc circulaire), P3 (opération de fluotournage du flanc circulaire en vue de l'obtention du profil de la jante).
- La figure 5 représente une vue en coupe illustrant le profil de la jante selon l'art antérieur, présentant une cavité formée sur la jante.
- La figure 6 représente une vue en coupe illustrant le profil de la jante selon l'invention avec la réalisation d'une soudure unique et la formation d'évidements dans un des sièges de talons de pneumatique.
- La figure 7 représente une vue de face de la roue hybride avec l'illustration des évidements.

Afin de rendre plus concret l'objet de l'invention, on le décrit maintenant d'une manière non limitative illustrée aux figures des dessins.

Comme indiqué précédemment, le profil de la jante (1) s'avère être simplifié par l'exécution d'une seule soudure (5) de liaison en vue de son assemblage avec le flasque (2). La jante (1) présente un profil circulaire (1a) faisant office de siège pour le pneumatique, uniquement du côté intérieur de la roue. L'autre profil (2a), faisant office de siège pour le pneumatique, est réalisé par le flasque (2).

On met en valeur ci-après certaines caractéristiques et avantages du procédé de l'invention.

Les figures 3 et 4 montrent les étapes d'obtention de la jante (1), respectivement selon l'art antérieur et selon l'invention.

Dans le cadre de l'invention, la jante (1) est réalisée suivant une opération (P1) de fabrication d'une ébauche en forme de flanc circulaire (1b) ; puis une opération (P2) d'expansion en une seule étape de ce flanc circulaire (1b) aux dimensions de la jante (1) finale ; et enfin une opération (P3) de fluotournage à froid ou à chaud du flanc circulaire (1b) jusqu'à obtenir la jante (1) dans sa forme et profil finaux, comportant la partie restante de flanc circulaire (1b) du côté qui sera soudé au flasque (2) et un épaulement (1a) uniquement du côté qui ne sera pas soudé au flasque (2).

Selon un mode de réalisation préféré de l'opération (P1) de fabrication, on fabrique une billette en alliage léger, puis on transforme cette billette en flanc circulaire (1b) par extrusion à chaud ou à froid. En comparaison avec d'autres techniques connues, cela permet d'obtenir un flanc (1b) présentant un allongement très important. L'opération (P2) d'expansion du flanc (1b) peut ainsi être réalisée à froid, c'est-à-dire à température ambiante, ce qui évite son réchauffage avant expansion. De plus, ce fort allongement permet d'effectuer une opération (P3) de fluotournage à froid après l'opération (P2) d'expansion à froid. Le matériau de la jante (1) subit un écrouissage important lors de l'opération (P3) de fluotournage à froid. Avant soudage au flasque (2), la jante (1) est donc soumise à un traitement thermique (par exemple T6 : mis en solution, trempé, revenu), durant lequel l'énergie stockée lors de l'écrouissage est restituée. Cela permet d'obtenir une recristallisation à grains fins dans le matériau de la jante (1). Sa microstructure est donc très fine et les caractéristiques mécaniques de la jante (1) sont améliorées par rapport à une technique de mise en forme à chaud.

On a représenté à l'étape P3 sur la figure 3 le profil de la jante (1) nécessaire pour obtenir la cavité (6) présentée sur la figure 5 lorsque la liaison entre le flasque et la jante est réalisée à l'aide de deux soudures. On peut voir le profil simplifié de la jante (1) à l'étape P3 de la figure 4. Ce profil est en effet bien plus simple que celui illustré dans le brevet FR 2 981 605 présenté à l'étape P3 de la figure 3. Cette simplification est rendue possible du fait de l'utilisation d'une seule et unique soudure (5) réalisée sur la roue constituant l'invention. Le profil externe (1a) de la jante (1) ne nécessite en effet plus qu'un seul épaulement constituant un siège de talon de pneumatique, au lieu de deux. On obtient ainsi un gain en temps de cycle et une simplification de la machine de fluotournage, ce qui diminue les coûts. L'autre profil (2a), faisant office de siège pour le pneumatique, est réalisé par le flasque (2).

Le fait d'avoir une seule soudure (5) comme illustré sur la figure 6 simplifie aussi grandement l'opération de soudage par rapport à la double soudure. En effet, la soudure se fait dans une seule direction perpendiculaire à la jante contrairement à la roue bi soudure où les soudures se font dans deux directions différentes. Il n'est plus nécessaire de faire pivoter la broche de soudage et le montage est simplifié donc moins cher tout en gagnant en temps de cycle et en usure du pion de soudage. L'opération de soudage (5) est réalisée à la jonction de la partie (2b) du flasque (2) et du flanc circulaire (1b) de la jante (1).

De plus, le fait d'avoir une seule soudure (5) permet l'accès aux deux côtés de la soudure. Il est alors possible de faire un usinage des deux côtés de la soudure. Cet usinage, couramment réalisé sur des tôles destinées à l'aéronautique, permet de supprimer les éventuelles bavures de soudage ainsi que les éventuels défauts en fond de soudure, souvent présents en soudage par friction malaxage. Ces défauts correspondent à un mauvais malaxage de l'alliage qui crée des lèvres non soudées en fond de soudure. Les bavures ou les lèvres non soudées sont des défauts qui créent des amorces de fissure lors des sollicitations en fatigue de la roue. Leur suppression est donc un gros avantage du point de vue de la fiabilité du procédé. L'accès aux deux côtés de la soudure permet aussi de réaliser un test de ressuage fréquentiel sur la soudure permettant de s'assurer de la stabilité du procédé de soudure et de garantir l'absence de défauts. Pour une roue avec deux soudures, l'accès aux deux côtés de la soudure n'est pas assuré. Il est donc nécessaire de sectionner une roue pour effectuer ce contrôle fréquentiel. Cet examen étant destructif, il entraîne la perte d'une partie de la production et donc une augmentation des coûts pour les roues comportant une cavité (6) fermée.

D'une manière essentielle et importante pour l'invention, la zone de valve est aussi grandement simplifiée. En effet, pour une roue comportant deux soudures, le perçage de la valve entraîne une ouverture de la cavité (6). La majorité des constructeurs ne souhaite pas avoir de cavités ouvertes dans les roues car cette ouverture entraîne la possibilité d'une rétention d'eau, de graviers ou autres objets. Une soudure entourant le perçage de la valve était donc nécessaire afin de fermer la cavité (6) et d'empêcher la rétention d'eau. Cette soudure représentait donc une étape supplémentaire au procédé présenté dans les brevets FR 2981605 et EP 1230099 entraînant un surcoût.

De plus, selon l'invention, le fait de faire la roue en deux parties avant de la souder permet de réaliser des formes plus complexes, qui ne seraient pas démoulables, dans une roue en une seule partie. Cette technologie permet de réaliser au niveau du flasque (2) des évidements (7), par exemple, sous forme de cavités, comme on peut le voir sur la figure 7. Ces évidements sont réalisés soit en fonderie, soit en forge, soit lors de l'étape de fonderie du procédé « COBAPRESS ». Ils sont situés au niveau de l'un des sièges de talons de pneumatique (3) que présente le flasque (2) et ne couvrent pas la circonférence de la roue. En effet, des zones sont pleines (8) afin d'augmenter la rigidité et la résistance de la roue. Ces zones pleines (8) aident aussi grandement au montage du pneumatique. En effet, sans ces zones pleines le talon de pneumatique peut se loger dans les cavités (7) au moment du montage. Ce talon de pneumatique peut être difficile à remonter sur son siège lors du montage et le fait d'avoir des zones pleines crée une pente qui aide grandement pour cette opération.

Une zone est aussi laissée sans évidement pour permettre le perçage et le positionnement de la valve avec une géométrie simple (9), comme on peut le voir sur la figure 7. Les évidements (7), comme représenté figures 6 et 7, ont un profil en U orienté côté soudure (5).

Le fait de réaliser des évidements n'est pas nouveau. En pratique, la réalisation de ces évidements au cours d'une étape de forge ou de fonderie est économique, car elle ne nécessite pas une opération d'usinage. On gagne ainsi en temps de cycle et en coût. La mise au mille, c'est-à-dire la quantité de matière engagée par rapport à la matière utile est aussi réduite.

En pratique et selon l'invention, celle-ci est remarquable par la combinaison de différentes phases opératoires du procédé qui apporte au plan pratique un très grand nombre d'avantages ci-avant rappelés par rapport à l'art antérieur. Il s'agit donc d'une optimisation qui a nécessité des investissements de recherche et développement conséquents et elle ne découlait pas de l'enseignement de l'art antérieur.

## Revendications

1. Procédé de fabrication d'une roue hybride en alliage léger, notamment à base d'aluminium ou de magnésium, comprenant un flasque avant (2) et une jante (1), le procédé mettant en oeuvre les différentes phases opératoires suivantes:
- on réalise le flasque (2) avec un profil interne (2a) apte à constituer un siège de talon de pneumatique ;
- on réalise la jante (1) avec, d'un côté, un profil externe (1a) apte à constituer un siège de talon de pneumatique, et de l'autre côté, un flanc circulaire (1b) d'assemblage avec une partie (2b) du flasque (2) ;
- on assemble le flasque (2) avec la jante (1), au niveau du siège (2a) dudit flasque (2) et du flanc circulaire (1b) de la jante (1) ;
***caractérisé* en ce que** l'assemblage entre la jante (1) et le flasque (2) est réalisé par soudage du flanc circulaire (1b) de la jante (1) et du flasque (2) à l'aide d'une unique soudure (5) par friction malaxage à l'aide d'un pion, en position permettant l'accès des deux côtés de la soudure.

2. Procédé selon la revendication 1, ***caractérisé* en ce qu'**on réalise des évidements (7) au niveau du siège (2a) du flasque (2), lesdits évidements (7) ne couvrant pas la circonférence de la roue, et présentant un profil en « U » orienté en direction du flanc circulaire (1b) de la jante (1).

3. Procédé selon l'une quelconque des revendications 1 et 2, ***caractérisé* en ce que** le flasque (2) est réalisé par coulage.

4. Procédé selon l'une quelconque des revendications 1 et 2, ***caractérisé* en ce que** le flasque (2) est réalisé par forge.

5. Procédé selon l'une quelconque des revendications 1 et 2, ***caractérisé* en ce que** le flasque (2) est réalisé par une double opération de coulage et forge.

6. Procédé selon la revendication 5, ***caractérisé* en ce que** la double opération de coulage et forge comprend une opération de coulage d'une préforme de fonderie, un transfert de ladite préforme dans une matrice de forge, une opération de forgeage de ladite préforme en vue de l'obtention du flasque (2), et un ébavurage pour l'obtention dudit flasque (2).

7. Procédé selon la revendication 5, ***caractérisé* en ce que** la double opération de coulage et forge comprend une opération de coulage d'une préforme de fonderie, un stockage de ladite préforme, un transfert de ladite préforme dans un four permettant de la réchauffer, un transfert de ladite préforme dans une matrice de forge, une opération de forgeage de ladite préforme en vue de l'obtention du flasque (2), et un ébavurage pour l'obtention dudit flasque (2).

8. Procédé selon la revendication 2, ***caractérisé* en ce que** lorsque le flasque (2) est réalisé par une double opération de coulage et forge, les évidements (7) sont réalisés dans le siège (2a) de talon de pneumatique sur le flasque (2) lors de l'opération de coulage.

9. Procédé selon l'une quelconque des revendications précédentes, ***caractérisé* en ce que** la jante (1) est réalisée suivant les opérations successives suivantes :
- une opération (P1) de fabrication d'un flanc circulaire (1b) ;
- une opération (P2) d'expansion en une seule étape de ce flanc circulaire (1b) aux dimensions de la jante finale ;
- une opération (P2) de fluotournage à froid ou à chaud du flanc circulaire (1b) pour obtenir la jante (1) dans sa forme et profil finaux, comportant un épaulement uniquement du côté qui ne sera pas soudé au flasque (2).

10. Procédé selon la revendication 9, ***caractérisé* en ce que** dans l'opération de fabrication (P1), le flanc circulaire (1b) est réalisé par extrusion à chaud ou à froid d'une billette en alliage léger.

11. Procédé selon la revendication 9, ***caractérisé* en ce que** dans l'opération de fabrication (P1), le flanc circulaire (1b) est réalisé par coulée en fonderie.

12. Procédé selon la revendication 9, ***caractérisé* en ce que** dans l'opération de fabrication (P1), le flanc circulaire (1b) est réalisé par frittage de poudre.

13. Procédé selon l'une des revendications 9 à 12, ***caractérisé* en ce que** l'opération d'expansion (P2) et l'opération de fluotournage (P3) sont réalisées à froid.

14. Procédé selon l'une des revendications précédentes, ***caractérisé* en ce que** le soudage par friction malaxage est précédé d'une opération d'usinage des zones à assembler.

15. Procédé selon l'une quelconque des revendications précédentes, ***caractérisé* en ce que** le soudage par friction malaxage est suivi d'une opération d'usinage des deux côtés de la soudure destinée à retirer la bavure et les éventuels défauts en fond de soudure.

## Patentansprüche

1. Verfahren zur Herstellung eines Hybridrads aus einer Leichtlegierung, insbesondere auf Basis von Aluminium oder Magnesium, umfassend einen Vorderflansch (2) und eine Felge (1), wobei in dem Verfahren die folgenden verschiedenen Betriebsphasen ausgeführt werden:
- Ausführen des Flansches (2) mit einem Innenprofil (2a), das geeignet ist, einen Reifenwulstsitz darzustellen;
- Ausführen der Felge (1) einerseits mit einem Außenprofil (1a), das geeignet ist, einen Reifenwulstsitz darzustellen, und andererseits mit einer kreisförmigen Flanke (1b) zum Zusammenfügen mit einem Teil (2b) des Flansches (2);
- Zusammenfügen des Flansches (2) mit der Felge (1) im Bereich des Sitzes (2a) des Flansches (2) und der kreisförmigen Flanke (1b) der Felge (1);
**dadurch gekennzeichnet, dass** die Verbindung zwischen der Felge (1) und dem Flansch (2) durch Schweißen der kreisförmigen Flanke (1b) der Felge (1) und des Flansches (2) mit einer einzigen Schweißnaht (5) durch Rührreibschweißen mit Hilfe eines Stifts in einer Position erfolgt, die den Zugang zu beiden Seiten der Schweißnaht ermöglicht.

2. Verfahren gemäß Anspruch 1, **dadurch gekennzeichnet, dass** Aussparungen (7) im Bereich des Sitzes (2a) des Flansches (2) geschaffen werden, wobei die Aussparungen (7) den Umfang des Rads nicht bedecken und ein "U"-Profil aufweisen, das in Richtung der kreisförmigen Flanke (1b) der Felge (1) ausgerichtet ist.

3. Verfahren gemäß einem der Ansprüche 1 und 2, **dadurch gekennzeichnet, dass** der Flansch (2) durch Gießen hergestellt wird.

4. Verfahren gemäß einem der Ansprüche 1 und 2, **dadurch gekennzeichnet, dass** der Flansch (2) durch Schmieden hergestellt wird.

5. Verfahren gemäß einem der Ansprüche 1 und 2, **dadurch gekennzeichnet, dass** der Flansch (2) durch einen doppelten Arbeitsgang des Gießens und Schmiedens hergestellt wird.

6. Verfahren gemäß Anspruch 5, **dadurch gekennzeichnet, dass** der doppelte Arbeitsgang des Gießens und Schmiedens einen Vorgang des Gießens eines Gussvorformlings, eine Übertragung des Vorformlings in ein Schmiedegesenk, einen Vorgang des Schmiedens dieses Vorformlings zum Zwecke des Erhalts des Flansches (2) und ein Entgraten zum Erhalt des Flansches (2) umfasst.

7. Verfahren gemäß Anspruch 5, **dadurch gekennzeichnet, dass** der doppelte Arbeitsgang des Gießens und Schmiedens einen Vorgang des Gießens eines Gussvorformlings, eine Lagerung des Vorformlings, eine Übertragung des Vorformlings in einen Ofen, um dessen Erwärmung zu ermöglichen, eine Übertragung des Vorformlings in ein Schmiedegesenk, einen Vorgang des Schmiedens dieses Vorformlings zum Zwecke des Erhalts des Flansches und ein Entgraten zum Erhalt des Flansches (2) umfasst.

8. Verfahren gemäß Anspruch 2, **dadurch gekennzeichnet, dass** die Aussparungen (7) in dem Sitz (2a) des Reifenwulstes auf dem Flansch (2) während des Arbeitsgangs des Gießens geschaffen werden, wenn der Flansch (2) durch einen doppelten Arbeitsgang des Gießens und Schmiedens hergestellt wird.

9. Verfahren gemäß einem der vorhergehenden Ansprüche, **dadurch gekennzeichnet, dass** die Felge (1) in den folgenden aufeinanderfolgenden Arbeitsgängen hergestellt wird:
- ein Vorgang (P1) des Herstellens einer kreisförmigen Flanke (1b);
- ein Vorgang (P2) des Ausweitens dieser kreisförmigen Flanke (1b) in einem einzigen Schritt auf die Abmessungen der fertigen Felge;
- einen Vorgang (P2) des Kalt- oder Warmfließformens der kreisförmigen Flanke (1b), um die Felge (1) in ihrer endgültigen Form und ihrem endgültigen Profil mit einer Schulter nur auf jener Seite zu erhalten, die nicht mit dem Flansch (2) verschweißt wird.

10. Verfahren gemäß Anspruch 9, **dadurch gekennzeichnet, dass** die kreisförmige Flanke (1b) in dem Herstellungsvorgang (P1) durch Warm- oder Kaltextrusion eines Barrens aus Leichtlegierung hergestellt wird.

11. Verfahren gemäß Anspruch 9, **dadurch gekennzeichnet, dass** die kreisförmige Flanke (1b) in dem Herstellungsvorgang (P1) durch Schmelzguss hergestellt wird.

12. Verfahren gemäß Anspruch 9, **dadurch gekennzeichnet, dass** die kreisförmige Flanke (1b) in dem Herstellungsvorgang (P1) durch Pulversintern hergestellt wird.

13. Verfahren gemäß einem der Ansprüche 9 bis 12, **dadurch gekennzeichnet, dass** der Vorgang des Ausweitens (P2) und der Vorgang des Fließformens (P3) kalt durchgeführt werden.

14. Verfahren gemäß einem der vorhergehenden Ansprüche, **dadurch gekennzeichnet, dass** dem Rührreibschweißen ein Vorgang des Bearbeitens der zusammenzufügenden Bereiche vorausgeht.

15. Verfahren gemäß einem der vorhergehenden Ansprüche, **dadurch gekennzeichnet, dass** nach dem Rührreibschweißen ein Vorgang des Bearbeitens auf beiden Seiten der Schweißnaht folgt, welcher dazu bestimmt ist, den Grat und etwaige Fehler am Boden der Schweißnaht zu beseitigen.

## Claims

1. Manufacturing process for a light-alloy hybrid wheel, particularly based on aluminum or magnesium, including a front flange (2) and a rim (1), the process implementing the following separate operational phases:
- the flange (2) is made with an internal profile (2a) capable of constituting a tire bead seat;
- the rim (1) is made with, on the one side, an external profile (1a) capable of constituting a tire bead seat, and on the other side, a circular flank (1b) for assembly with part (2b) of the flange (2);
- the flange (2) is assembled to the rim (1), at the seat (2a) of said flange (2) and the circular flank (1b) of the rim (1).
***characterized* in that** the assembly of the rim (1) and the flange (2) is made by welding the circular flank (1b) of the rim (1) and the flange (2) by means of a single friction stir weld (5) using a pin, in a position that allows access to both sides of the weld.

2. Process according claims 1, ***characterized* in that** recesses (7) are made in the seat (2a) of the flange (2), said recesses (7) do not cover the circumference of the wheel, and have a U-shaped profile oriented in the direction of the circular flank (1b) of the rim (1).

3. Process according to one of claims 1 and 2, ***characterized* in that** the flange (2) is made by casting.

4. Process according to one of claims 1 and 2, ***characterized* in that** the flange (2) is made by forging.

5. Process according to one of claims 1 and 2, ***characterized* in that** the flange (2) is made by a dual casting and forging operation.

6. Process according to claim 5, ***characterized* in that** the dual casting and forging operation comprises a casting operation of a foundry preform, a transfer of said foundry preform into a forging die, a forging operation of said foundry preform in order to obtaining the flask (2), and a deburring to obtain said flask (2).

7. Process according to claim 5, ***characterized* in that** the dual casting and forging operation comprises a casting operation of a foundry preform, a storage of said foundry preform, a transfer of said foundry preform into an oven allowing it to be heated, a transfer of said foundry preform into a forging die, a forging operation of said foundry preform in order to obtain the flask, and a deburring to obtain said flask (2).

8. Process according to claim 2, ***characterized* in that** when the flask (2) is made by a dual casting and forging operation, the recesses (7) are formed within the tire bead seat (2a) on the flask (2) during the casting operation.

9. Process according to any one of the preceding claims, ***characterized* in that** the rim (1) is made according to the following consecutive operations:
- an operation (P1) of manufacturing a circular flank (1b);
- an operation (P2) of expanding said circular flank (1b) to the size of the final rim in a single step;
- an operation (P2) of cold or hot flospinning of the circular flank (1b) so as to obtain the rim (1) in the final shape and profile thereof, comprising a shoulder only on the side that will not be welded to the flange (2).

10. Process according to claim 9, ***characterized* in that** in the manufacturing operation (P1), the circular flank (1b) is made by hot or cold extrusion of a light alloy billet.

11. Process according to claim 9, ***characterized* in that** in the manufacturing operation (P1), the circular flank (1b) is made by casting in a foundry.

12. Process according to claim 9, ***characterized* in that** in the manufacturing operation (P1), the circular flank (1b) is made by powder sintering.

13. Process according to one of claims 9 to 12, ***characterized* in that** the expansion operation (P2) and flospinning operation (P3) are cold-made.

14. Process according to one of the preceding claims, ***characterized* in that** the friction stir welding is preceded by a machining operation of assembly zones.

15. Process according to any one of the preceding claims, ***characterized* in that** the friction stir welding is followed by a machining operation on both sides of the weld in order to remove burring and any defects at the bottom of the weld.
